# EUROPEAN PATENT APPLICATION

(11) **EP 3 260 351 A1**
(43) Date of publication of application: **27.12.2017**
(21) Application number: 15882353.4
(22) Date of filing: 28.04.2015
(51) Int. Cl.: B62D 1/19

(54) **DEVICE FOR PREVENTING PASSIVE COLLAPSE OF STEERING COLUMN AND METHOD FOR PREVENTING PASSIVE COLLAPSE**

(30) Priority: 16.02.2015 CN 201510083283
(71) Applicant: Bosch Huayu Steering Systems Co., Ltd., Shanghai 201821 (CN)
(72) Inventor: JIANG, Jun, Shanghai 201821 (CN); WAN, Ti, Shanghai 201821 (CN); LACAILLE, Christophe, Shanghai 201821 (CN)
(74) Representative: McCartney, Jonathan William
(86) International application number: PCT/CN2015/077675
(87) International publication number: WO 2016/131214

(57) **Abstract**

Disclosed is a device for preventing passive collapse of a steering column, which comprises a steering column assembly. Two sides of a mounting bracket of the steering column assembly are provided with a mounting bracket left side wall plate and a mounting bracket right side wall plate respectively. Wall plate holes at corresponding height positions are formed in the upper portion of the left side wall plate and the upper portion of the right side wall plate respectively. One end of the device for preventing passive collapse penetrates through the two wall plate holes and is arranged in the mounting bracket of the steering column assembly, and the other end of the device for preventing passive collapse clamps a handle metal plate of a steering column adjustment handle. Two collapse-prevention pin clamping grooves are formed in the top of the mounting bracket, and a top protrusion part of the device for preventing passive collapse penetrates through the two collapse-prevention pin clamping grooves. The present device is simple in structure and convenient to use, slightly modifies an original mounting bracket of the steering column assembly, is capable of effectively preventing passive collapse of the steering column caused by an incorrect using mode and an incorrect force application angle during adjustment operation, and would not affect normal collapse of the steering column.

## Description

### BACKGROUND OF THE INVENTION

### Technical Field

The invention relates to a limiting protection device and method, in particular to a device applied to a steering column and used for preventing passive collapse of the steering column caused by incorrect usage when a user adjusts the steering column, and a method for preventing such passive collapse based on the device.

### 2. Description of Related Art

At present, one of the key components of an automobile steering system is the steering column assembly, and serving as an important component for connecting the steering wheel and steering gear, the steering column assembly is one of the basic constituent parts of the automobile steering system and is mainly used for transmitting the torque applied to the steering wheel by a driver and driving the steering gear to work, so that the function of controlling the automobile's running direction is achieved, and the steering column assembly is the key component determining the automobile running safety and reliability. With the continuous development of the automobile industry and the continuous improvement of automobile quality, it is an important link to guarantee that the steering column assembly meets the designed performance requirements for automobile manufacturers to guarantee and improve product quality. The operating performance of a whole automobile depends on the main constituent part, namely the steering column and the steering column assembly, as the quality of the steering column directly affects the overall steering stability of the automobile and is one of the most important factors determining the safety of the whole automobile. Thus when the steering column is designed, various factors such as torque transmission, locking force, using comfort and safety need to be taken into consideration, and the factor, namely passive collapse prevention, can be easily neglected. Passive collapse of the steering column is caused by an incorrect usage mode and an incorrect force application angle when a user adjusts the steering column, and collapse of the steering column is frequently caused by too violent force applying when a user opens the adjustment handle to adjust the position of the steering column, and consequentially, the steering column cannot continue to be used normally. However, an effective solution to the situation is not yet available in the prior art, and thus the steering column cannot be used continuously.

In conclusion, for achieving the purpose of passive collapse prevention, which is one of the performance indexes of the steering column in the prior art, a device and method for solving the passive collapse problem urgently needs to be provided currently to effectively prevent passive collapse of the steering column.

### BRIEF SUMMARY OF THE INVENTION

For solving the problems, the invention provides a device for preventing passive collapse of a steering column and a method for preventing passive collapse. By additionally arranging the device on the steering column, collapse of the steering column cannot be caused even if the force application degree or the force application angle is incorrect when a user opens the adjustment handle to adjust the steering column. The specific structure of the invention is as follows.

The device for preventing passive collapse of the steering column comprises a steering column assembly, and is characterized in that:
two sides of a mounting bracket of the steering column assembly are provided with a left side wall plate of the mounting bracket left side wall plate and a right side wall plate of the mounting bracket respectively, wall plate holes at corresponding height positions are formed in the upper portion of the left side wall plate of the mounting bracket and the upper portion of the right side wall plate of the mounting bracket, respectively, and one end of the device for preventing passive collapse penetrates through the two wall plate holes and is arranged in the mounting bracket of the steering column assembly;
the other end of the device for preventing passive collapse clamps a handle metal plate of a steering column adjustment handle;
two collapse-prevention pin clamping grooves are formed in the top of the mounting bracket, and a collapse-prevention pin or a top protrusion part(used as a collapse-prevention pin) of the device for preventing passive collapse penetrates through the two collapse-prevention pin clamping grooves.

The device for preventing passive collapse of the steering column of the invention is characterized in that the device for preventing passive collapse comprises a metal shaft, a collapse-prevention pin, a limiting plastic cap for the left side wall plate, a limiting plastic cap for the right side wall plate and bent sheet metal, wherein the two ends of the metal shaft penetrate through the two wall plate holes formed in the left side wall plate of the mounting bracket and the right side wall plate of the mounting bracket, respectively, namely the overall length of the metal shaft is larger than the distance between the two wall plate holes; a shaft shoulder is formed on the metal shaft, and the collapse-prevention pin is arranged at the position of the shaft shoulder; the limiting plastic cap for the left side wall plate and the limiting plastic cap for the right side wall plate, which correspond to the wall plate holes of the left side wall plate of the mounting bracket and the right side wall plate of the mounting bracket in position, are arranged on shaft body portions, close to the two ends of the metal shaft. respectively, and the two limiting plastic caps are clamped in the wall plate holes respectively; the metal shaft is supported in the mounting bracket so as to be limited and prevented from disengaging; the bent sheet metal is a "h" shaped the bent sheet metal is welded to an end of the metal shaft, the top protrusion part of the bent sheet metal is a pin shaped and used as collapse-prevention pin, and an opening in the bottom of the bent sheet metal clamps a handle metal plate of a steering column adjustment handle.

The device for preventing passive collapse of the steering column of the invention is characterized in that the collapse-prevention pin comprises a pin body, a fixed base and connecting bolts, wherein the pin body is in a rectangular plate shape, pin shoulders are arranged on the two sides of the bottom of the pin body, a trapezoidal notch is formed in the center of the bottom of the pin body, a semicircular notch is formed in the middle of the fixed base and right against the trapezoidal notch in the bottom of the pin body, and the size of a hole formed by closing(or folding) the trapezoidal notch and the semicircular notch correspond to that of the shaft shoulder; bolt through holes at corresponding positions are formed in the fixed base and the pin shoulders, respectively, and the connecting bolts pass through the bolt through holes to fix the pin body and the fixed base to the shaft shoulder of the metal shaft.

The device for preventing passive collapse of the steering column of the invention is characterized in that the collapse-prevention pin and the pin-shaped top protrusion part of the bent sheet metal penetrate through the two collapse-prevention pin clamping grooves of the mounting bracket respectively.

The technical scheme of the present invention aims at that the functional part of the device for preventing passive collapse of the steering column is composed of a small driving shaft assembly and two collapse-prevention pins. The small driving shaft assembly is formed by welding the metal shaft and the h-shaped bent sheet metal. The metal shaft penetrates through the left wall plate hole and the right wall plate hole of the mounting bracket, thereby having a single degree of freedom of axial sliding. The pin-shaped top protrusion part of the h-shaped bent sheet metal serves as one collapse-prevention pin, and the opening in the bottom of the bent sheet metal clamps the lower end of the handle metal plate of the steering column adjustment handle, namely, the handle metal plate is clamped by two open metal sheets all the time; by the adoption of the connecting method, the handle metal plate can slide in a gap of the h-shaped bent sheet metal, adjustment of up-down opening and closing of the handle is not affected, and the metal shaft can simultaneously slide in the axial direction along with the handle metal plate during handle adjustment. The collapse-prevention pin arranged on the shaft shoulder of the metal shaft is fixedly connected to the metal shaft through a bolt, the collapse-prevention pin and the top protrusion part of the h-shaped bent sheet metal form the two collapse-prevention pins, and the upper ends of the two collapse-prevention pins both penetrate through the collapse-prevention pin clamping grooves of the mounting bracket. As the width of the collapse-prevention pin and the width of the pin-shaped top protrusion part of the bent sheet metal are both smaller than the width of the collapse-prevention pin clamping grooves of the mounting bracket, the metal shaft can move within an axial movement range in a limited mode. As the limiting plastic cap for the left side wall plate and the limiting plastic cap for the right side wall plate are clamped into the wall plate holes respectively, when mounted on the two side wall plates of the mounting bracket, the metal shaft is limited and prevented from disengaging, and redundant portions of the wall plate holes can be sealed. As the limiting plastic cap for the left side wall plate and the limiting plastic cap for the right side wall plate are both made of plastic, noise which generated from moving of the metal shaft contacting the limiting plastic caps, can be lowered.

A method for preventing passive collapse of the steering column of the invention is based on the device for preventing passive collapse of the steering column and comprises the following steps that:
1) firstly, the device for preventing passive collapse of the steering column of the invention is mounted in place, specifically, a metal shaft of the device for preventing passive collapse penetrates through wall plate holes of a left side wall plate of the mounting bracket and a right side wall plate of the mounting bracket, respectively, then a limiting plastic cap for the left side wall plate and a limiting plastic cap for the right side wall plate are clamped in the wall plate holes, respectively, the metal shaft is supported in the mounting support, and the opening in the bottom of the h-shaped bent sheet metal welded to the metal shaft clamps the handle metal plate of the steering column adjustment handle;
2) in the handle opening process, a handle metal plate of the steering column adjustment handle is rotated to slide relative to a cam, and the handle metal plate moves rightwards;
3) as the opening in the bottom of the h-shaped bent sheet metal clamps the handle metal plate all the time, the metal shaft welded to the bent sheet metal and the collapse-prevention pin fixedly connected with the metal shaft are also driven to move rightwards while the handle metal plate moves rightwards, and the collapse-prevention pin and the pin-shaped top protrusion part of the bent sheet metal penetrate through the two collapse-prevention pin clamping grooves of the mounting bracket respectively;
4) as the collapse-prevention pin and the pin-shaped top protrusion part of the bent sheet metal penetrate through the two collapse-prevention pin clamping grooves of the mounting bracket respectively in step (3), when the steering column suffers from an external impact force in the axial direction of the steering column, the mounting support can impact the collapse-prevention pin and the pin-shaped top protrusion part of the bent sheet metal, the two collapse-prevention pins are clamped by the collapse-prevention pin clamping grooves at the corresponding positions respectively at the moment, and the collapsing motion of the steering column is prevented;
5) when the steering column adjustment handle needs to be closed, the process is conducted in an inverted order, the adjustment handle is rotated reversely, the handle metal plate slides relative to the cam and moves leftwards, the h-shaped bent sheet metal is driven to move leftwards, the collapse-prevention pin fixedly connected with the metal shaft and the pin-shaped top protrusion part of the bent sheet metal are made to disengage from the corresponding collapse-prevention pin clamping grooves respectively, and normal collapse of the steering column will not be affected if the steering column is impacted at the moment.

The device for preventing passive collapse of the steering column and the method for preventing passive collapse of the invention have the following beneficial effects:
1. according to the device for preventing passive collapse of the steering column and the method for preventing passive collapse of the invention, the device is simple in structure and convenient to mount, an original mounting bracket of the steering column is slightly modified, and the device is extremely suitable for adjustment operation of various steering columns;
2. according to the device for preventing passive collapse of the steering column and the method for preventing passive collapse of the invention, the designed device structure can effectively prevent passive collapse of the steering column caused by an incorrect using mode and an incorrect force application angle during adjustment operation of the steering column;
3. according to the device for preventing passive collapse of the steering column and the method for preventing passive collapse of the invention, when the device is not needed, a user just needs to move the handle metal plate out of the opening in the bottom of the h-shaped bent sheet metal by reversely rotating the adjustment handle, normal collapse of the steering column is not affected, and assembling and experimental work of various steering columns is facilitated.

### BRIEF DESCRIPTION OF THE SEVERAL VIEWS OF THE DRAWINGS

FIG. 1 is a specific structural schematic diagram of the device part of a device for preventing passive collapse of a steering column and a method for preventing passive collapse of the invention;
FIG. 2 is a specific structural schematic diagram of a metal shaft and bent sheet metal welded to the metal shaft of the device part of the device for preventing passive collapse of the steering column and the method for preventing passive collapse of the invention;
FIG. 3 is a structural exploded schematic diagram of all parts of a collapse-prevention pin of the device part of the device for preventing passive collapse of the steering column and the method for preventing passive collapse of the invention;
FIG. 4 is a specific structural schematic diagram of a mounting bracket of the device for preventing passive collapse of the steering column and the method for preventing passive collapse of the invention;
FIG. 5 is a specific mounting schematic diagram of the device part of the device for preventing passive collapse of the steering column and the method for preventing passive collapse of the invention;
FIG. 6 is a specific implementation space diagram of the device part of the device for preventing passive collapse of the steering column and the method for preventing passive collapse of the invention.

In FIGs: 1-steering column assembly, 2-mounting bracket, 2a-left side wall plate of mounting bracket, 2b-right side wall plate of mounting bracket, 2c-wall plate hole, 2d-collapse-prevention pin clamping groove, 3-steering column adjustment handle, 3a-handle metal plate, A-device for preventing passive collapse, A1-metal shaft, A2-collapse-prevention pin, A3-limiting plastic cap for left side wall plate, A4-limiting plastic cap for right side wall plate, A5-bent sheet metal, All-shaft shoulder, A21-pin body, A21a-pin shoulder, A22-fixed base, A23-connecting bolt, A24-bolt through hole.

### DETAILED DESCRIPTION OF THE INVENTION

A further description of the device for preventing passive collapse of a steering column and a method for preventing passive collapse of the invention is given with accompanying drawings and embodiments as follows.

### Embodiment

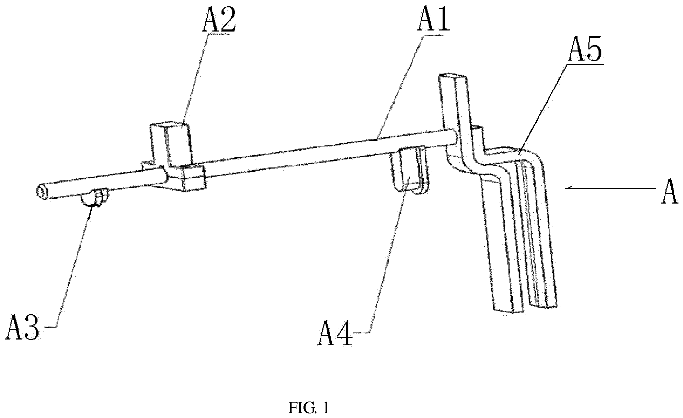

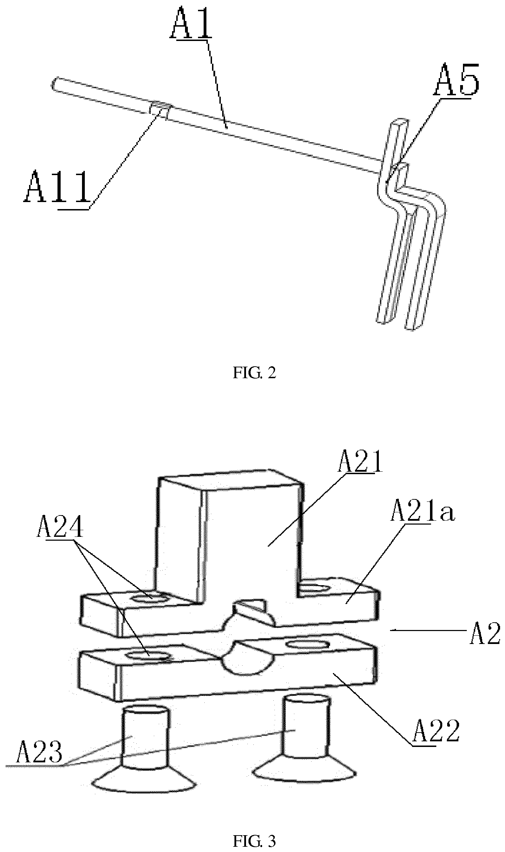

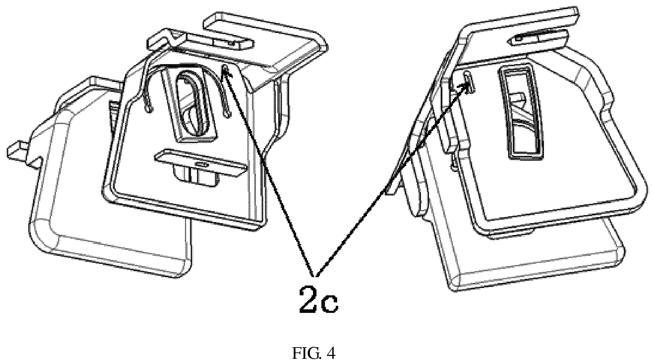

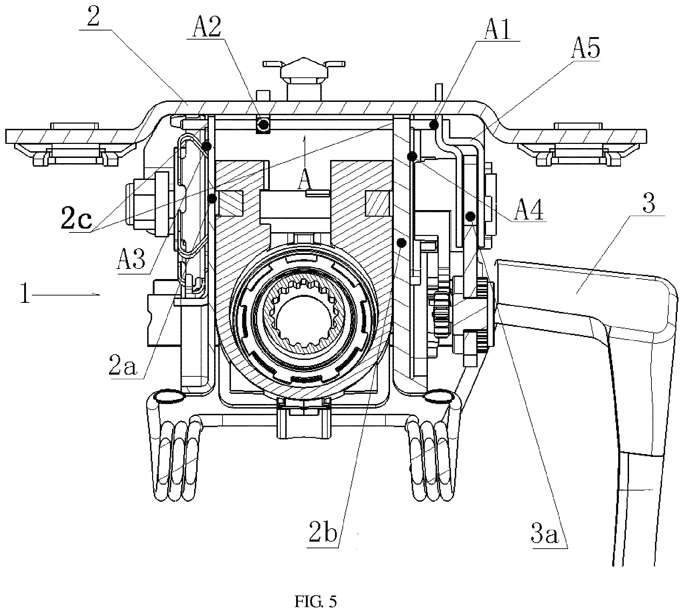

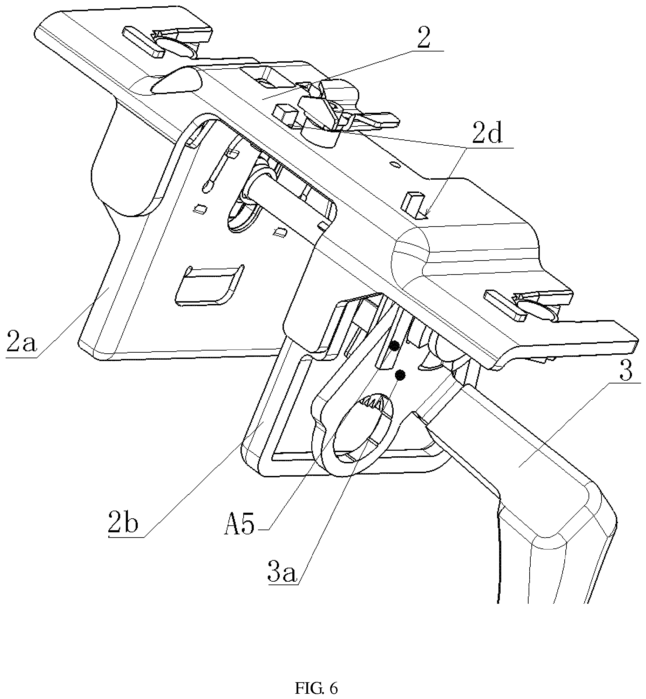

As shown in FIGs. 1-6, a device for preventing passive collapse of a steering column comprises a steering column assembly 1, wherein the two sides of a mounting bracket 2 of the steering column assembly are provided with a left side wall plate 2a of mounting bracket and a right side wall plate 2b of mounting bracket, respectively, wall plate holes 2c (the specific positions are shown in FIG. 4) at corresponding height positions are formed in the upper portion of the left side wall plate of the mounting bracket and the upper portion of the right side wall plate of the mounting bracket, respectively, and one end of the device A for preventing passive collapse penetrates through the two wall plate holes and is arranged in the mounting bracket of the steering column assembly;
the other end of the device A for preventing passive collapse clamps a handle metal plate 3a of a steering column adjustment handle 3;
two collapse-prevention pin clamping grooves 2d are formed in the top of the mounting bracket 2, and a collapse-prevention pin or a top protrusion part(used as a collapse-prevention pin) of the device A for preventing passive collapse penetrates through the two collapse-prevention pin clamping grooves.

As shown in FIGs., the device A for preventing passive collapse comprises a metal shaft A1, a collapse-prevention pin A2, a limiting plastic cap A3 for the left side wall plate, a limiting plastic cap A4 for the right side wall plate, and bent sheet metal A5, wherein the two ends of the metal shaft penetrate through the two wall plate holes 2c formed in the left side wall plate 2a of the mounting bracket and the right side wall plate 2b of the mounting bracket, respectively, namely the overall length of the metal shaft is larger than the distance between the two wall plate holes. A shaft shoulder A11 is formed on the metal shaft, and the collapse-prevention pin is arranged at the position of the shaft shoulder; the limiting plastic cap for the left side wall plate and the limiting plastic cap for the right side wall plate, which correspond to the wall plate holes of the left side wall plate and the right side wall plate of the mounting bracket in position, are arranged on shaft body portions, close to the two ends of the metal shaft respectively, and the two limiting plastic caps are clamped in the wall plate holes respectively. The metal shaft is supported in the mounting bracket 2 so as to be limited and prevented from disengaging. The bent sheet metal is a h shaped, the side portion of the bent sheet metal is welded to the shaft end of the metal shaft, the top protrusion part of the bent sheet metal is a pin shaped, and an opening in the bottom of the bent sheet metal clamps a handle metal plate 3a of a steering column adjustment handle 3.

As shown in FIGs., the collapse-prevention pin A2 comprises a pin body A21, a fixed base A22 and connecting bolts A23, wherein the pin body is in a rectangular plate shape, pin shoulders A21a are arranged on the two sides of the bottom of the pin body, a trapezoidal notch is formed in the center of the bottom of the pin body, a semicircular notch is formed in the middle of the fixed base and right faces the trapezoidal notch in the bottom of the pin body, and the size of a hole formed by combining(or folding) the trapezoidal notch and the semicircular notched corresponds to the size of the shaft shoulder A11; bolt through holes A24 at corresponding positions are formed in the fixed base and the pin shoulders respectively, and the connecting bolts pass through the bolt through holes to fix the pin body and the fixed base to the shaft shoulder of the metal shaft A1.

The collapse-prevention pin A2 and the pin-shaped top protrusion part of the bent sheet metal A5 penetrate through the two collapse-prevention pin clamping grooves 2d of the mounting bracket 2, respectively.

The functional part of the device for preventing passive collapse of the steering column of the invention is composed of a small driving shaft assembly and two collapse-prevention pins. The small driving shaft assembly is formed by welding the metal shaft and the h-shaped bent sheet metal. The metal shaft penetrates through the left wall plate hole and the right wall plate hole of the mounting bracket, thereby having a single degree of freedom of axial sliding. The pin-shaped top protrusion part of the h-shaped bent sheet metal serves as one collapse-prevention pin, and the opening in the bottom of the bent sheet metal clamps the lower end of the handle metal plate of the steering column adjustment handle, namely, the handle metal plate is clamped by two open metal sheets all the time. By the adoption of the connecting method, the handle metal plate can slide in a gap of the h-shaped bent sheet metal, adjustment of up-down opening and closing of the handle is not affected, and the metal shaft can simultaneously slide in the axial direction along with the handle metal plate during handle adjustment. The collapse-prevention pin arranged on the shaft shoulder of the metal shaft is fixedly connected to the metal shaft through a bolt, the collapse-prevention pin and the top protrusion part of the h-shaped bent sheet metal form the two collapse-prevention pins, and the upper ends of the two collapse-prevention pins both penetrate through the collapse-prevention pin clamping grooves of the mounting bracket; since the width of the collapse-prevention pin and the width of the pin-shaped top protrusion part of the bent sheet metal are both smaller than the width of the collapse-prevention pin clamping grooves of the mounting bracket, the metal shaft can move within an axial movement range in a limited mode; since the limiting plastic cap for the left side wall plate and the limiting plastic cap for the right side wall plate are clamped into the wall plate holes respectively, when mounted on the two side wall plates of the mounting bracket, the metal shaft is limited and prevented from disengaging, and redundant portions of the wall plate holes can be sealed; since the limiting plastic cap for the left side wall plate and the limiting plastic cap for the right side wall plate are both made of plastic, noise generated when the metal shaft, which makes contact with the limiting plastic caps, moves can be lowered.

As shown in FIGs. 1-6, a method for preventing passive collapse of a steering column based on the device for preventing passive collapse of the steering column comprises the following steps that:
1) firstly, the device for preventing passive collapse of the steering column of the invention is mounted in place, specifically, the metal shaft A1 of the device A for preventing passive collapse penetrates through the wall plate holes 2c of the left side wall plate 2a of the mounting bracket and the right side wall plate 2b of the mounting bracket 2, then the limiting plastic cap A3 for the left side wall plate and the limiting plastic cap A4 for the right side wall plate are clamped in the wall plate holes, respectively, the metal shaft is supported in the mounting support, and the opening in the bottom of the h-shaped bent sheet metal A5 welded to the metal shaft clamps the handle metal plate 3a of the steering column adjustment handle 3;
2) in the handle opening process, the handle metal plate 3a of the steering column adjustment handle 3 is rotated to slide relative to a cam, and the handle metal plate moves rightwards;
3) as the opening in the bottom of the h-shaped bent sheet metal A5 clamps the handle metal plate 3a all the time, the metal shaft A1 welded to the bent sheet metal and the collapse-prevention pin A2 fixedly connected with the metal shaft are also driven to move rightwards while the handle metal plate moves rightwards, and the collapse-prevention pin and the pin-shaped top protrusion part of the bent sheet metal penetrate through the two collapse-prevention pin clamping grooves 2d of the mounting bracket 2, respectively;
4) as the collapse-prevention pin A2 and the pin-shaped top protrusion part of the bent sheet metal A5 penetrate through the two collapse-prevention pin clamping grooves 2d of the mounting bracket 2 respectively in step (3), when the steering column suffers from an external impact force in the axial direction of the steering column, the mounting support can impact the collapse-prevention pin and the pin-shaped top protrusion part of the bent sheet metal, the two collapse-prevention pins are clamped by the collapse-prevention pin clamping grooves at the corresponding positions respectively at the moment, and the collapsing motion of the steering column is prevented;
5) when the steering column adjustment handle 3 needs to be closed, the process is conducted in an inverted order, the adjustment handle is rotated reversely, the handle metal plate 3a slides relative to the cam and moves leftwards, the h-shaped bent sheet metal A5 is driven to move leftwards, the collapse-prevention pin A2 fixedly connected with the metal shaft A1 and the pin-shaped top protrusion part of the bent sheet metal A5 are made to disengage from the corresponding collapse-prevention pin clamping grooves 2d respectively, and normal collapse of the steering column will not be affected if the steering column is impacted at the moment.

According to the device for preventing passive collapse of the steering column and the method for preventing passive collapse of the invention, the device is simple in structure and convenient to mount, an original mounting bracket of the steering column is slightly modified, and the device is extremely suitable for adjustment operation of various steering columns. In addition, the designed device structure of the invention can effectively prevent passive collapse of the steering column caused by an incorrect using mode and an incorrect force application angle during adjustment operation of the steering column. Furthermore, when the device of the invention is not needed, a user just needs to move the handle metal plate out of the opening in the bottom of the h-shaped bent sheet metal by reversely rotating the adjustment handle, normal collapse of the steering column is not affected, and assembling and experiment work of various steering columns is facilitated. The invention is suitable for the field of passive collapse prevention of various steering columns during adjustment.

## Claims

1. A device for preventing passive collapse of a steering column, comprising a steering column assembly (1), **characterized in that**:
the two sides of a mounting bracket (2) of the steering column assembly (1) are provided with a left side wall plate (2a) of a mounting bracket and a right side wall plate (2b) of the mounting bracket, respectively, wall plate holes (2c) at corresponding height positions are formed in the upper portion of the left side wall plate of the mounting bracket and the upper portion of the right side wall plate of the mounting bracket, respectively, and one end of the device (A) for preventing passive collapse penetrates through the two wall plate holes and is arranged in the mounting bracket of the steering column assembly;
the other end of the device (A) for preventing passive collapse clamps a handle metal plate (3a) of a steering column adjustment handle (3);
two collapse-prevention pin clamping grooves (2d) are formed in the top of the mounting bracket (2), and top protrusion parts of the device (A) for preventing passive collapse penetrates through the two collapse-prevention pin clamping grooves.

2. The device for preventing passive collapse of the steering column according to Claim 1, **characterized in that** the device (A) for preventing passive collapse comprises a metal shaft (A1), a collapse-prevention pin (A2), a limiting plastic cap (A3) for the left side wall plate, a limiting plastic cap (A4) for the right side wall plate and a bent sheet metal (A5), wherein the two ends of the metal shaft penetrate through the two wall plate holes (2c) formed in the left side wall plate (2a) of the mounting bracket and the right side wall plate (2b) of the mounting bracket, respectively, namely the overall length of the metal shaft is larger than the distance between the two wall plate holes; a shaft shoulder (A11) is formed on the metal shaft, and the collapse-prevention pin is arranged at the position of the shaft shoulder; the limiting plastic cap for the left side wall plate and the limiting plastic cap for the right side wall plate, which correspond to the wall plate holes of the left side wall plate of the mounting bracket and the right side wall plate of the mounting bracket in position, are arranged on shaft body portions, close to the two ends of the metal shaft, and are clamped in the wall plate holes respectively; the metal shaft supported in the mounting bracket (2) is limited and prevented from disengaging; the bent sheet metal is an h shape,the bent sheet metal is welded to an end of the metal shaft, the top protrusion part of the bent sheet metal is in a pin shape and used as a collapse-prevention pin, and an opening in the bottom of the bent sheet metal clamps a handle metal plate (3a) of a steering column adjustment handle (3).

3. The device for preventing passive collapse of the steering column according to Claim 2, **characterized in that** the collapse-prevention pin (A2) comprises a pin body (A21), a fixed base (A22) and connecting bolts (A23), wherein the pin body is in a rectangular plate shape, pin shoulders (A21a) are arranged on the two sides of the bottom of the pin body, a trapezoidal notch is formed in the center of the bottom of the pin body, a semicircular notch is formed in the middle of the fixed base and right faces the trapezoidal notch in the bottom of the pin body, and the size of a hole formed by folding the trapezoidal notch and the semicircular notched corresponds to that of the shaft shoulder (A11); bolt through holes (A24) at corresponding positions are formed in the fixed base and the pin shoulders respectively, and the connecting bolts pass through the bolt through holes to fix the pin body and the fixed base to the shaft shoulder of the metal shaft (A1).

4. The device for preventing passive collapse of the steering column according to Claim 2, **characterized in that** the collapse-prevention pin (A2) and the pin-shaped top protrusion part of the bent sheet metal (A5) penetrate through the two collapse-prevention pin clamping grooves (2d) of the mounting bracket (2), respectively.

5. A method for preventing passive collapse of a steering column based on the device for preventing passive collapse of the steering column, comprising the following steps that:
1) firstly, the device for preventing passive collapse of the steering column is mounted in place, the metal shaft (A1) of the device (A) for preventing passive collapse penetrates through the wall plate holes (2c) of the left side wall plate (2a) of the mounting bracket and the right side wall plate (2b) of the mounting bracket(2), then the limiting plastic cap (A3) for the left side wall plate and the limiting plastic cap (A4) for the right side wall plate are clamped in the wall plate holes, respectively, the metal shaft is supported in the mounting support, and the opening in the bottom of the h-shaped bent sheet metal (A5) welded to the metal shaft clamps the handle metal plate (3a) of the steering column adjustment handle (3);
2) in the handle opening process, the handle metal plate (3a) of the steering column adjustment handle (3) is rotated to slide relative to a cam, and the handle metal plate moves rightwards;
3) since the opening in the bottom of the h-shaped bent sheet metal (A5) clamps the handle metal plate (3a) all the time, the metal shaft (A1) welded to the bent sheet metal and the collapse-prevention pin (A2) fixedly connected with the metal shaft are also driven to move rightwards while the handle metal plate moves rightwards, and the collapse-prevention pin and the pin-shaped top protrusion part of the bent sheet metal penetrate through the two collapse-prevention pin clamping grooves (2d) of the mounting bracket (2), respectively;
4) as the collapse-prevention pin (A2) and the pin-shaped top protrusion part of the bent sheet metal (A5) penetrates through the two collapse-prevention pin clamping grooves (2d) of the mounting bracket (2) respectively in step (3), when the steering column suffers from an external impact force in the axial direction of the steering column, the mounting support can impact the collapse-prevention pin and the pin-shaped top protrusion part of the bent sheet metal, the two collapse-prevention pins are clamped by the collapse-prevention pin clamping grooves at the corresponding positions respectively at the moment, and a collapse movement of the steering column is prevented;
5) when the steering column adjustment handle (3) needs to be closed, the process is conducted in an inverted order, the adjustment handle is rotated reversely, the handle metal plate (3a) slides relative to the cam and moves leftwards, the h-shaped bent sheet metal (A5) is driven to move leftwards, the collapse-prevention pin (A2) fixedly connected with the metal shaft (A1) and the pin-shaped top protrusion part of the bent sheet metal (A5) are made to disengage from the corresponding collapse-prevention pin clamping grooves (2d) respectively, and normal collapse of the steering column will not be affected if the steering column is impacted at the moment.
